Europäisches Patentamt

European Patent Office

Office européen des brevets

(11) Publication number: **0 338 141**
**A1**

(12) **EUROPEAN PATENT APPLICATION**

(21) Application number: 88303480.3

(22) Date of filing: 18.04.88

(51) Int. Cl.⁴: **B60K 41/02 , B60K 28/16**

(43) Date of publication of application:
25.10.89 Bulletin 89/43

(84) Designated Contracting States:
AT BE CH DE ES FR GB GR IT LI LU NL SE

(71) Applicant: **KONGSBERG AUTOMOTIVE A/S**
**Kirkegaardsveien**
**N-3600 Kongsberg(NO)**

(72) Inventor: **Thoresen, Oivind**
**Veungsdalsveien 75**
**N-3600 Kongsberg(NO)**
Inventor: **Svenke, Per Ola**
**Ivar Aasens vei 26**
**N-3600 Kongsberg(NO)**

(74) Representative: **Brereton, Paul Arthur et al**
**REDDIE & GROSE 16 Theobalds Road**
**London WC1X 8PL(GB)**

(54) Method and device for controlling the torque applied to motor vehicle driving wheels from the engine.

㊼ In order to control the traction of motor vehicle driving wheels (1, 2) the driving wheels are immediately and automatically disengaged from the engine (6) when wheel slip is detected, and then gradually re-engaged as soon as a substantially non-slip state is obtained, the fuel supply to the engine (6) being reduced after disengagement in order to avoid racing. The disengagement and the re-engagement of the driving wheels are effected by means of the ordinary clutch of the vehicle through a clutch actuator.

An electronic control unit (14) controls both the clutch actuator (15) through a hydraulic proportional valve (18) and a fuel admission servo (21) for the engine (6).

FIG 4

## Method and device for controlling the torque applied to motor vehicle driving wheels from the engine

The invention relates to a method and a device for controlling the torque applied to motor vehicle driving wheels from the engine in order to control wheel spinning prior to the driver detecting such spinning.

Motor vehicle wheel tyres can transmit forces between the vehicle and the road surface. The force acting on the wheel in the rolling direction thereof provides a traction (and braking force, respectively), and the force acting transversely to the rolling direction provides a steering force.

In a pure traction condition, i.e. when the force transversely to the rolling direction is 0, the traction force may be increased to an upper limit which is determined by the condition of the tyre and the road surface. If an attempt is made to increase the traction force above this limit, such an attempt will not succeed. Instead, the excess power will result in a torque causing acceleration of the rotating masses in the traction line (wheel, wheel axis, differential gear, counter shaft, gear transmission, clutch and engine) with resulting spinning of the wheel. Thus, it serves no useful purpose to try to increase the traction force beyond the traction limit, since this leads to a spinning of the wheel and a reduction of the effective traction.

Accordingly, existing systems for controlling the traction are based on a reduction of the transmitted torque from the engine by reducing the fuel supply to the motor when spinning or slip of the wheel is detected.

The object of the invention is to provide a method and a device for automatically controlling the traction in a very simple manner and substantially by means which are anyway present in the vehicle.

The method according to the invention is characterized in that detected wheel spinning triggers the following automatically performed control cycle:
- the ordinary clutch of the vehicle is immediately and completely disengaged in order to release the driving wheels from the engine,
- the admission of fuel to the engine is controlled in order to avoid racing of the engine upon disengagement,
- the clutch is gradually and uniformly re-engaged as soon as a substantially non-slip state is obtained,
the triggering of a further similar control cycle possibly taking place before the preceding cycle is completed, whereby the torque transmitted by the clutch is continuously controlled so as to maintain the average torque as high as possible under the existing frictional conditions. Both the disengagement and the re-engagement of the clutch is preferably effected by means of a hydraulically operated clutch actuator, whereas the admission of fuel to the engine can be controlled by means of an admission servo motor.

The device according to the invention comprises a sensor for detecting wheel spinning and means for reducing the torque transferred from the engine when such spinning is detected, and the device is characterized in that the torque reducing means comprise an electronic control unit controlling

(a) a proportional valve governing the supply of a hydraulic pressure fluid to a hydraulic actuator operating the ordinary clutch of the vehicle and

(b) an engine fuel admission servo.

A substantial advantage of the device according to the invention is that by means of a simple control device the normal clutch can be made to react very fast as far as torque control in the transmission line is concerned. Because the rotating masses of the transmission line are mainly present in the engine and not in the transmission and the driving wheels, the driving wheels will be slowed down very quickly to a non-spinning state only by means of the braking resistance afforded by the road surface.

The invention will now be described in more detail by means of an embodiment, reference being had to the drawing.

Fig. 1 illustrates the splitting of the forces on a driving wheel in a force acting in the rolling direction of the wheel and a force transversely thereon, $\alpha$ being the socalled lateral slip angle, i.e. the angle between the rolling direction of the wheel and its velocity vector v measured in the centre of the contact area between wheel and surface.

Figs. 2 and 3 illustrate typical relationships between the force in the rolling direction of the wheel and the force transversely thereto as a function of the wheel slip s, the lateral slip angle $\alpha$ serving as a parameter.

Fig. 4 is a diagrammatic view of a vehicle having a device according to the invention.

Fig. 5 illustrates the torque transmissions and the speed of the driving wheel as a function of the time during a typical control period according to the invention.

A driving wheel will always have a higher rotational speed than a wheel which rolls without providing any driving force, or which brakes. Wheel slip s is defined as the relative difference between the rotational speed $N_b$ of the wheel when transferring a torque, and the speed $N_u$ which the wheel would have had if no torque were transferred. More specifically s is defined as

$$\frac{N_b - N_u}{N_u} \; .$$

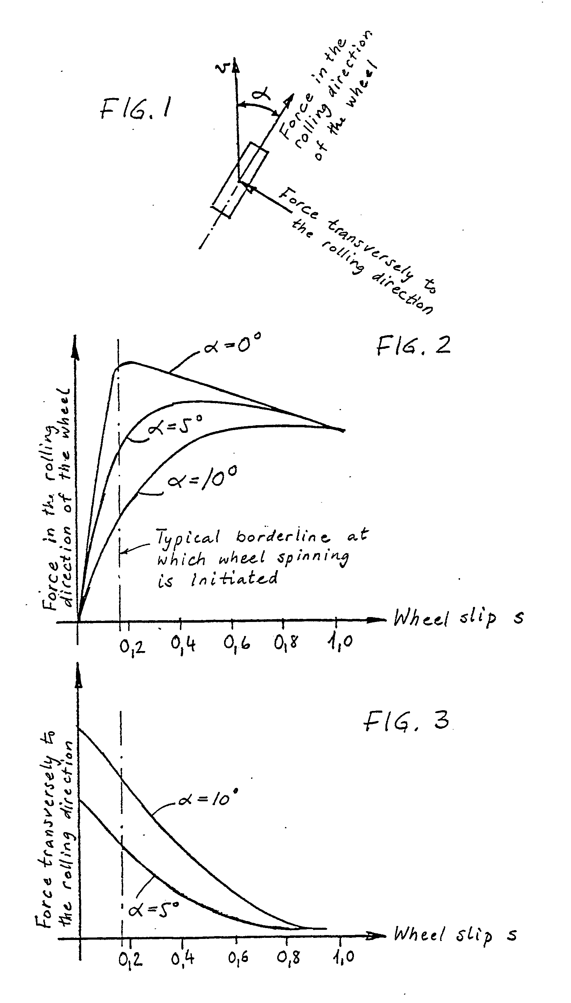

Fig. 2 illustrates how the force in the rolling direction of the wheel will first increase with increasing wheel slip, especially when driving straight ahead ($\alpha = 0$), and how this force is reduced when wheel slip is occurring.

Fig. 3 mainly illustrates the drastic reduction of the lateral force when the wheel slip develops into a spinning.

When lateral forces are transmitted the capacity of the wheel for transmitting traction will be reduced, since the torque at spinning is reduced. Furthermore, upon occurrence of wheel spinning the capacity for transferring lateral forces will be dramatically reduced. A spinning wheel will not only have a reduced capacity for traction, but also the lateral forces (and thereby the possibility of steering) will disappear.

In vehicles in which the front wheels are the driving wheels, wheel spinning due to high traction will generally result in the vehicle proceeding straight ahead, while maintaining its directional stability (the vehicle will not rotate about its own axis), since the rear wheels Will still take up lateral forces. In a vehicle in which the rear wheels are driven, a spinning of the driving wheels will result in a heavy reduction of steering capacity, but not as heavy as in a vehicle in which the front wheels are the driving wheels, since the front wheels can still take up steering forces. On the other hand, the vehicle will lose its directional stability, which means that it will start rotating about its own vertical axis unless the traction is reduced very quickly and/or a correctional steering of the vehicle is effected.

Since it is difficult to detect a tendency for wheel spinning until spinning has in fact occurred, it is extremely important to return the spinning wheel or wheels as quickly as possible to a non-spinning state, so that the wheel or wheels can again transmit forces. A system meeting this requirement does not only increase the capacity of the vehicle for traction, but also increases the safety by maintaining the manoeuvring capacity of the vehicle with the least possible interruption, which is even more important.

An effective traction control system should therefore possess two basic characteristics:

a) Capacity for reducing as quickly as possible the transmitted tractional torque through the transmission line of the vehicle when wheel spinning is detected.

b) The rotating mass should be as small as possible, so that the spinning wheel or wheels is or are slowed down to a non-spinning speed as quickly as possible.

A system having these characteristics can be obtained by including in the transmission line immediately adjacent each driving wheel a fastly operable clutch for disengaging the torque transmitted from the engine, and providing the wheel with a controlled brake assisting the frictional forces from the road surface in slowing down the wheel.

However, such a system would introduce a number of new elements, and according to the present invention there is provided a substantially simpler system through use of the normal clutch of the vehicle. By means of a simple control device also this clutch can be made very fast as far as torque control in the transmission line is concerned, and at the same time the rotating mass is not substantially increased, since the major part of the rotating masses in the transmission line are located in the engine, and not in the transmission and the driving wheels. The inert mass constituted by the driving wheels and the transmission is sufficiently small for the driving wheels to be slowed down very quickly to a non-spinning state, even without a separate braking device, i.e. only due to the braking torque from the road surface.

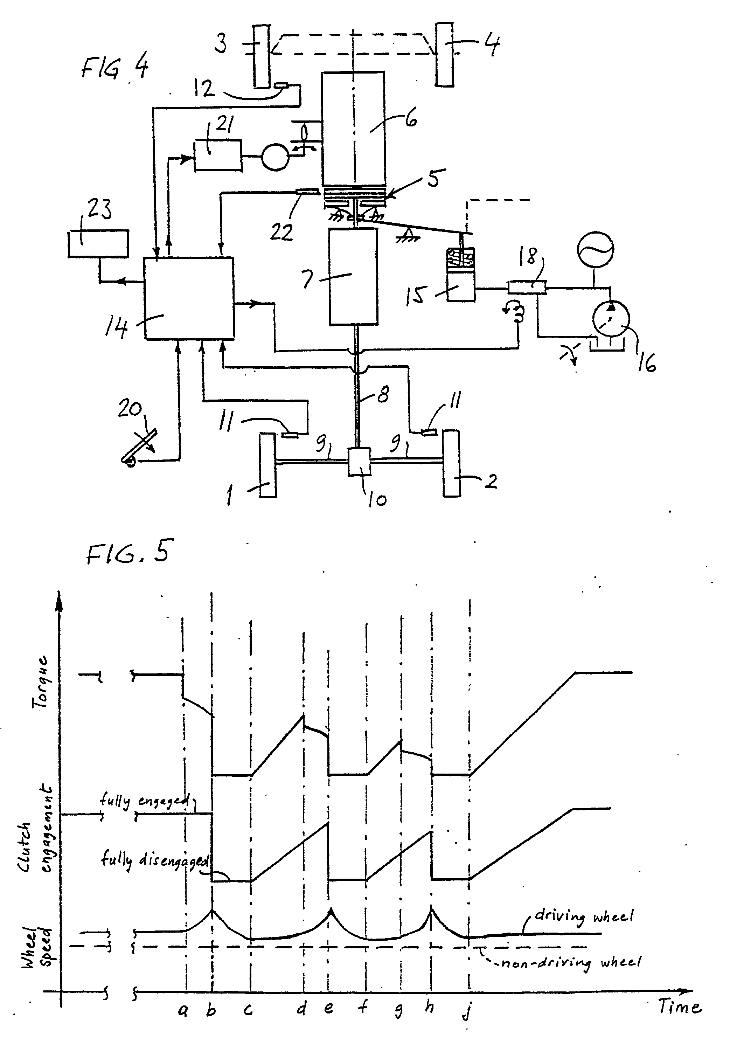

In Fig. 4, which schematically illustrates a vehicle having four wheels 1, 2, 3 and 4, of which the two front wheels 3, 4 do not transmit traction, it is illustrated how a traction control by the normal clutch 5 of the vehicle can be implemented.

The transmission line of the vehicle consists of an engine 6, the clutch 5 referred to, a transmission 7 and driving shafts 8, 9 which through a differential gear 10 transmits torque to the driving wheels 1, 2. Both the driving wheels 1, 2 are equipped with conventional speed sensors 11 which continuously measure the speed of the driving wheels. A speed sensor 12 is also incorporated in one or both of the non-driving front wheels. The signals from the speed sensors 11 and 12 are passed to a central electronic control unit 14.

The components of the transmission line are of a conventional type. The engine can be either of the carburettor or injection type. The clutch can be an ordinary friction plate clutch having a "sun spring" device. However, it is preferred to replace the "sun spring" by a centrally positioned clutch actuator, since this will give a faster and more precise clutch function. For sake of clarity the actuator 15 shown in the drawing is not positioned centrally. The transmission gear 7 can be an ordinary manual gear shift transmission for four or five speeds.

The clutch actuator 15 is indicated to be hydraulically operated, the hydraulic pressure fluid being supplied by a hydraulic pump 16 which may either be driven by an electric motor or by the engine 6, and which provides a sufficient inlet pressure to a proportional valve 18 which independently of the rate of oil flow to the actuator 15 provides for the hydraulic pressure in the outlet from the valve to be approximately proportional to an entrance signal from the control unit 14. Thereby it becomes possible to control the clutch actuator and thereby the torque which can be transferred by the clutch 5 from the engine 1 to the gear transmission 7.

The supply or admission of fuel to the engine 6 is not controlled directly from an accelerator pedal 20, but only indirectly through the control unit 14 and a fuel admission servo 21, which can be either a conventional direct current motor having a position indicator and a control loop or a step motor.

The engine speed is measured by means of a speed sensor 22.

In addition to receiving signals from all the speed sensors 11, 12 and 22 as well as from the accelerator pedal 20, the electronic control unit 14 submits control signals to the fuel supply servo 21 and the control valve 18 for the clutch 5 as well as to an indicator 23 which will alert the driver that wheel spinning has occurred.

During normal driving conditions without detected wheel spinning the fuel supply will be a direct function of the accelerator pedal position, and the clutch 5 will be fully engaged. Engagement of the clutch when the vehicle is started from a full stop and disengagement and re-engagement when shifting can be manual through a clutch pedal in a conventional manner. However, as a consequence of the clutch 5 according to the invention already being adapted for hydraulic engagement and disengagement, the system may without substantial additional elements permit an automatic operation also of the normal engagement and disengagement operations of the clutch by means of the electronic unit 14.

During driving under conditions when wheel spinning occurs due to excess torque the following occurs:

When the difference between the speed measured on one or both of the driving wheels and the speed measured on the non-driving wheel or wheels exceeds a value which is a function of vehicle speed and fuel supply, the following automatically performed traction control cycle is triggered:

1) Immediate and full disengagement of the clutch through the hydraulic actuator 15.

2) At the same time the fuel supply to the engine is reduced by means of the fuel admission servo 21 to prevent racing of the engine. However, the rotational speed of the engine should not become lower than the value measured immediately prior to initiating the traction control.

3) When the driving wheels have again obtained a speed which is close to the speed of a non-driving wheel (the closeness can depend on the speed of the vehicle and the position of the accelerator pedal), the clutch is gradually and uniformly re-engaged by controlling the pressure in the actuator 15, whereby a torque from the engine will again be transmitted to the driving wheels. During the disengagement the speed of the engine has been maintained at such a value that the re-engaged wheel or wheels will experience a positive torque (traction). Upon or simultaneously with the re-engagement of the clutch the fuel supply to the engine can be increased. The re-engagement of the clutch starts very soon after the spinning has occurred, usually before the driver has noticed the spinning of the wheel.

In some cases full traction maY be obtained after a single cycle. If a slip or spinning should again occur, the clutch will again be disengaged completely and the traction control cycle referred to above repeated.

However, in most cases the low road friction causing the spinnings will subsist. In such cases, the wheel may begin to accelerate at any time during re-engagement of the clutch and reach a spinning state whereupon a further control cycle will be triggered. In the case of such repeated spinnings a substantial number of successive cycles may occur so fast that the clutch will virtually operate in a slip state transmitting the maximum average torque compatible with the existing road friction. The duration of each wheel spinning period will be too short for control of the vehicle to be lost.

The operation of the described traction control has been made automatic through the electronic control unit and takes place without any intervention of the driver. In Fig. 5 the control cycle is illustrated by the position of the clutch, the speed of the driving wheel and the torque on the driving wheel. If the frictional condition of the road surface is reduced at the point a, a surplus of torque in the transmission line will accelerate the masses therein. Thus, the speed of the driving wheel will increase. At point b the wheel slip has developed into wheel spinning. The traction control cycle is then triggered. The clutch is disengaged, and the speed of the driving wheels will be reduced due to resistance from the road surface. When the speed of the driving wheel has been reduced to a predetermined value relative to the speed of the non-driving wheels (indicated at c), the engine will be gradually re-engaged by the clutch. The curve for the torque on the driving wheels shows how this torque will be reduced immediately upon spinning at point a. As the speed of the wheel increases, the torque is reduced. When the traction control is initiated at point b the clutch will be disengaged so that the torque is reduced to 0. Through the gradual re-engagement of the engine starting at point c, the torque will again gradually increase until the clutch is fully re-engaged provided the road friction is sufficient. Several control cycles may occur in swift succession. In Fig. 5 it is indicated that the wheel may again accelerate to a spinning state before the clutch is fully re-engaged, thus triggering a further control cycle before the previous cycle has been completed.

## Claims

1. Method of controlling the torque applied to motor vehicle driving wheels from the engine in order to control wheel spinning prior to the driver detecting such spinning, **characterized in** that detected wheel spinning triggers the following automatically performed control cycle:
- the ordinary clutch of the vehicle is immediately and completely disengaged in order to release the driving wheels from the engine,
- the admission of fuel to the engine is controlled in order to avoid racing of the engine upon disengagement,
- the clutch is gradually and uniformly re-engaged as soon as a substantially non-slip state is obtained, the triggering of a further similar control cycle possibly taking place before the preceding cycle is completed, whereby the torque transmitted by the clutch is continuously controlled so as to maintain the average torque as high as possible under the existing frictional conditions.

2. Method according to claim 1, **characterized in** that the disengagement and the re-engagement of the clutch is performed by means of a hydraulically or pneumatically controlled actuator.

3. Method according to claim 1 or 2, **characterized in** that the admission of fuel to the engine is controlled by an admission servo motor.

4. A device for controlling the torque applied to motor vehicle driving wheels (1, 2) from the engine (6) to control wheel spinning prior to the driver detecting such spinning, comprising a sensor (11) for detecting wheel spinning and means for reducing the torque transferred from the engine (6) when such spinning is detected, **characterized in** that the torque reducing means comprise an electronic control unit (14) controlling

(a) a proportional valve (18) governing the supply of a hydraulic pressure fluid to a hydraulic actuator (15) operating the ordinary clutch (5) of the vehicle and

(b) an engine fuel admission servo (21).

FIG. 1

$v$

$\alpha$

Force in the rolling direction of the wheel

Force transversely to the rolling direction

FIG. 2

$\alpha = 0°$

$\alpha = 5°$

$\alpha = 10°$

Force in the rolling direction of the wheel

Typical borderline at which wheel spinning is initiated

Wheel slip $s$

0,2    0,4    0,6    0,8    1,0

FIG. 3

$\alpha = 10°$

$\alpha = 5°$

Force transversely to the rolling direction

Wheel slip $s$

0,2    0,4    0,6    0,8    1,0

FIG 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 605 600 (AUDI)<br>* column 5, lines 28-41 *<br>--- | 1-4 | B 60 K 41/02<br>B 60 K 28/16 |
| X | GB-A-2 178 871 (SACHS SYSTEMTECHNIK)<br>* abstract *<br>--- | 1,3,4 | |
| A | GB-A-2 190 158 (TEVES)<br>* abstract *<br>--- | 1-4 | |
| A | GB-A-2 163 511 (TEVES)<br>* abstract *<br>--- | 1-4 | |
| A | EP-A-0 259 634 (BOSCH)<br>* whole document *<br>----- | 1-4 | |

TECHNICAL FIELDS
SEARCHED (Int. Cl.4)

B 60 K 41/00
B 60 K 28/00
B 60 K 23/00
F 16 D 25/00

The present search report has been drawn up for all claims

| Place of search | Date of completion of the search | Examiner |
|---|---|---|
| BERLIN | 28-11-1988 | CLOT P.F.J. |

EPO FORM 1503 03.82 (P0401)